# EUROPEAN PATENT SPECIFICATION

(11) **EP 3 818 292 B1**
(45) Date of publication and mention of the grant of the patent: **12.04.2023**
(21) Application number: 19755679.8
(22) Date of filing: 05.07.2019
(51) Int. Cl.: F16L 15/08, F16L 17/025, F16L 37/14, F16L 47/16

(54) **PIPE AND COUPLER JOINT WITH GROOVE AND MULTI LIP SEAL**
ROHR UND KOPPLUNG MIT RILLE UND MULTILIPPENDICHTUNG
JOINT DE TUYAU ET DE RACCORD DOTÉ D'UNE RAINURE ET D'UN JOINT À LÈVRES MULTIPLES

(30) Priority: 06.07.2018 IN 201841025359
(43) Date of publication of application: 12.05.2021
(73) Proprietor: Ashirvad Pipes Pvt. Ltd, Karnataka, Bangalore 562107 (IN)
(72) Inventor: PODDAR, Deepak, Karnataka Bangalore 560 034 (IN)
(74) Representative: Grünecker Patent- und Rechtsanwälte PartG mbB
(86) International application number: PCT/IB2019/055752
(87) International publication number: WO 2020/008428

(56) References cited:
- EP-A1- 0 622 577
- WO-A1-2005/116511
- WO-A1-2016/174687
- WO-A2-2012/090227
- US-A- 3 592 491
- US-A1- 2005 001 388
- US-A1- 2006 125 193

## Description

### TECHNICAL FIELD

The present invention in general relates to a field of pipes and pipe joints. Particularly, the invention relates to a pipe and coupler assembly made of polyvinyl chloride (PVC). Further, the invention specifies the pipe and coupler assembly with a locking means and a multi-lip sealing arrangement.

### BACKGROUND OF THE INVENTION

Generally, pipes are used for conveying fluids from one point to another. The application of pipes are many, and hence the pipes may be joined using suitable pipe joining means such as couplers or collars for conveying the fluid to farther distances from the source. Some applications of the pipe and coupler assembly may include sanitation, water supply, supply of chemicals, and the like. The pipe and coupler assembly may be used for both aboveground applications, and for underground applications. The underground applications of the pipe and coupler system may include borewells, where the pipe may extend several meters below the surface of the earth, and a large capacity motor or pump may be used to draw the water from a source. Conventionally, the pipes used for underground applications are manufactured of metallic materials, owing to their strength and load bearing capacity. These metallic pipes may be threaded at both sides and may be joined to one another through threaded couplings. The conventional metallic pipes may pose several challenges, and one such challenge may include corrosion or rusting of the pipe and couplers over a period of time, which may result in breakage and thereby damaging the whole underground piping assembly. In addition, the metallic pipes being heavy requires additional efforts or special equipment's for assembling and dismantling. To overcome the drawbacks associated with the metallic pipe and coupler assemblies, many efforts have been made, and some alternative light weight, high strength, long life assemblies have been developed. One such alterative to the metallic pipes may include development of pipe and coupler assembly made of polyvinyl chloride (PVC) material. The conventional PVC pipe and coupler assemblies may be formed by push fitting the pipe in a coupler and sealing rings may be provided to prevent leakage. The pipe and coupler may be fixed together with a plugging arrangement, such as a screw in order to prevent the rotation of the pipe inside the coupler. However, such pipe and coupler assembly may not be suitable for the underground applications, since the load bearing is being done by plugging system, which may be insufficient to take the load. One more alternative in the art, may include making inner threads integral to the pipe by heat expanding one end of the pipe. However, when such arrangement is used in underground applications, the hanging loads are heavy and the top clamping system may damage the top expanded inner thread end of the pipe and the pipe end would notch or break due to heavy loads, resulting in burial of the pump and the pipe.

With ongoing developments in the pipe industry, pipe and coupler assembly made of polyvinyl chloride (PVC) for use in underground applications such as borewells have been developed and used. The pipe and coupler assembly may include a pipe with male threads on both the ends, and the coupler with female threads receiving the male threads. One such threaded pipe-coupling system is disclosed in WO2005/116511, *Poddar et. Al* [hereafter referred to as '511 application]. The '511 Application discloses a PVC coupler having internal square threads which engage with external threads provided on pipes. Sealing rings are provided to ensure leak proof connectivity. The conventional pipe and coupler assemblies made of polyvinyl chloride are configured such that, one end of the pipe may be non-removably fixed to the coupler, and the other end of the pipe may be joined adjacent to the coupler to form the joint. For non-removably fixing one end of the coupler with the pipe, various arrangements have been proposed, and such arrangements may include use of adhesive bonding, locking units such as pins, wire locks and the like. The '511 Application discloses a wire lock accommodated in a coupler groove and partially in the outer surface of the pipe through a tangential hole to lock the coupler with one end of the pipe. Another publication, WO2012/090227, *Shand et. Al.,* discloses an adhesive bonding surface provided inside of the inner wall of the coupler in a central region in between the threaded region. Said adhesive bonding surface of the coupler bonds with a corresponding outer bonding surface of the fixed pipe to form a permanent joint. Yet another threaded pipe-coupler assembly is disclosed in publication WO2016/174687, *Baheti et. Al,* [hereafter referred to as '687 application]. '687 application discloses a locking system in the form of a circlip and pressure flange accommodated partially in grooves defined in the coupler and the pipe to form permanent joint. The fixed and removable pipes are threadedly joined to fixed coupler end and removable coupler end of the coupler, respectively. Also, the coupler end accommodating the fixed end of the pipe may be provided with a narrow groove for accommodating a circular sealing ring to form a fluid seal between the pipe and the coupler. However, the conventional couplers will have substantially semi-circular narrow groove in the inner circumference which accommodates a circular sealing ring. The provision of a semi-circular narrow groove will increase stress concentration in the location of the groove and may result in notching when the load is acting on the pipe and coupler assembly. This may cause failure of the pipe and coupler assembly due to various loads such as axial load of the pump and motor, turbulent loads created by water, and vibrational loads created in the borewell. The present disclosure is directed to overcome one or more limitations stated above or any other limitation associated with the prior arts.

### SUMMARY OF THE INVENTION

The shortcomings of the prior art are overcome, and additional advantages are provided through the provision of assembly as claimed in the present invention.

A pipe and coupler assembly made of polyvinyl chloride according to the invention is defined in claim 1.

In an embodiment, the first multi-lip sealing ring comprises a flat base portion on an outer surface and a plurality of inner projections projecting in an inner surface. Further, each of the plurality of inner projections is divided by a cavity, wherein, the plurality of inner projections abuts the outer surface of the first end of the pipe.

In an embodiment, the width of the second annular groove is at least two times of the pitch of the plurality of the inner square shaped threads.

In an embodiment, the locking means is a made of a deformable member. The locking means is made of a metallic material or a polymeric material.

In an embodiment, the locking means is a wire lock.

In an embodiment, the coupler includes a slot defined on the outer surface of adjoining the tangential hole to fold the locking means within an outer diameter of the coupler.

In an embodiment, a plurality of ribs on the outer surface of the coupler to hold a pipe-wrench during assembling and dismantling of the coupler and the pipe.

In an embodiment, the second end of the pipe is receivable by the second coupling end of an adjoining coupler for joining two pipes.

In an embodiment, the assembly comprises a second multi-lip sealing ring provided on the second end of the pipe. The second multi-lip sealing ring is adapted to abut the inner surface of the second coupling end to form a fluid seal between the second end of the pipe and the second coupling end of the coupler.

In an embodiment, the second multi-lip sealing ring is provided in a portion of the second end adjoining the plurality of outer square-shaped threads.

In an embodiment, the coupler comprises an annular rib extending in the inner surface of the coupler in the flat portion.

It is to be understood that the aspects and embodiments of the disclosure described above may be used in any combination with each other. Several of the aspects and embodiments may be combined together to form a further embodiment of the disclosure.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING FIGURES

The novel features and characteristic of the invention are set forth in the appended claims. The invention itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
Figure 1 illustrates a sectional view of the pipe and coupler assembly, not forming part of the invention.
Figure 2 illustrates a sectional front view of the pipe and coupler assembly with the wire lock, in accordance with an exemplary embodiment of the present disclosure.
Figure 3 illustrates a sectional view of the coupler, according to an embodiment of the present disclosure.
Figures 4A and 4B illustrates perspective views of a first multi-lip sealing ring, according to an embodiment of the present disclosure.
Figure 5 illustrates a sectional view of the first multi-lip sealing ring of Figure. 4A.
Figure 6 illustrates a sectional view of the second end of the pipe, according to an embodiment of the present disclosure.
Figures 7A and 7B illustrates perspective views of a second multi-lip sealing ring, according to an embodiment of the present disclosure.
Figure 8 illustrates a schematic view of the pipe and coupler assembly fixed to a submersible pump inside a borewell, in accordance with an exemplary embodiment of the present disclosure.

The figures depict embodiments of the disclosure for purposes of illustration only.

One skilled in the art will readily recognize from the following description that alternative embodiments of the structures and methods illustrated herein may be employed without departing from the principles of the disclosure described herein.

### DETAILED DESCRIPTION

The foregoing has broadly outlined the features and technical advantages of the present invention in order that the detailed description of the invention that follows may be better understood. Additional features and advantages of the disclosure will be described hereinafter which form the subject of the claims of the invention. It should be appreciated by those skilled in the art that the conception and specific embodiment disclosed may be readily utilized as a basis for modifying or designing other structures for carrying out the same purposes of the present invention. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

The terms "comprises", "comprising", or any other variations thereof, are intended to cover a non-exclusive inclusion, such that an assembly, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Embodiments of the present invention disclose a pipe and coupler assembly made of polyvinyl chloride (PVC). The pipe and coupler assembly may be used in borewells for drawing the water or other fluids from source to a point of interest. Since, the pipe and coupler of the assembly is made of the polyvinyl chloride material, the problems associated with the metallic pipes such as corrosion or rusting may be prevented. This significantly improves life of the pipe and coupler assembly, and also prevents any accidental breakage of the assembly during use. However, the pipe and coupler assembly made of polyvinyl chloride material may pose certain challenges such as accidental dismantling of the pipe with coupler due to various forces such as torsion, axial, and undulations acting on the assembly. Also, the couplers made of polyvinyl chloride may break due to notching effect at a narrow groove region, because stress concentration acting in the narrow groove region. To reduce the stress concentration acting in the narrow groove region, the groove for accommodating the sealing ring is widened. Widening of the groove may relive the stresses acting in the groove region and may improve life of the pipe and coupler unit. However, widening of the groove may require bigger sealing ring to be used which may be challenging to accommodate in the given dimensions of the pipe and coupler, since it may pose issues such as compression. To compensate this, if a groove depth is increased either in pipe or coupler, then the section may become weak which may again result in failure.

The pipe and coupler assembly of the present invention is also employed with a locking means such as wire lock, such that one end of the pipe is non-removably coupled to the coupler, and other end of the pipe can be coupled to an adjacent coupler for forming a joint, thereby prevent dismantling of the assembly. In the present disclosure, the groove for accommodating a sealing in the coupler is widened and thereby the stress acting in the groove region may be relived. Further, the widened groove may be fitted with a multi-lip sealing ring, which seals the complete portion of the groove, and provides easy compression. The multi-lip sealing ring may provide multiple sealing effect between the pipe and coupler. Thereby ensuing, fluid seal of the pipe and coupler unit, and maintain structural rigidity.

In some embodiment, the locking means is a flexible member and may be of any configuration.

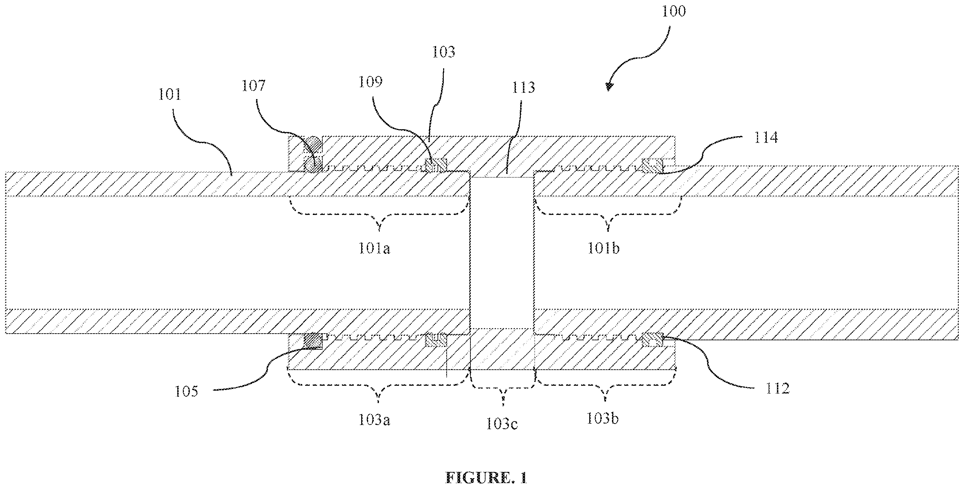

The following paragraphs describe the present invention with reference to Figures 1 to 9. In the figures the same element or elements which have the same functions are indicated by the same reference numerals.

Figure 1 is an exemplary embodiment not forming part of the invention which illustrates a sectional view of the pipe (101) and coupler assembly (100). The pipe (101) and coupler assembly (100) includes a pipe (101) manufactured of polyvinyl chloride material (PVC). The pipe (101) has a first end (101a) and a second end (101b), with a plurality of outer square shaped threads (102). The plurality of outer square shaped threads (102) are defined on an outer surface of the pipe (101) and may extend on at least a portion of the pipe (101) from either ends (101a and 101b). In an embodiment of the disclosure, pitch of the plurality of outer square shaped threads (102) may be configured based on diameter of the pipe (101). The pipe (101) may be configured to be joined by a coupler (103) for attaching another pipe (101), and thereby forming a piping system. The pipe (101) is adapted such that the first end (101a) may be non-removably coupled to the coupler (103), and the second end (101b) may be receivable by an adjacent coupler (103). The coupler (103) and the coupler assembly (100) may also be manufactured of the polyvinyl chloride material and may be used to connect two pipes (101) to form the joint. The coupler (103) includes a first coupling end (103a) and a second coupling end (103b) extending from either ends. The first coupling end (103a) and a second coupling end (103b) may be divided by a flat portion (103c). The coupler (103) may be configured with a plurality of internal square shaped threads (104) in both the first coupling end (103a) and the second coupling end (103b). The plurality of internal square shaped threads (104) may extend in an inner surface of die coupler (103) up to the flat portion (103c). The plurality of internal square shaped threads (104) are adapted to form meshing engagement with the plurality of the outer square shaped threads (102) on the pipe (101). The coupler (103) may comprise an annular rib (113) extending in the inner surface of the coupler (103) in the flat portion (103c).

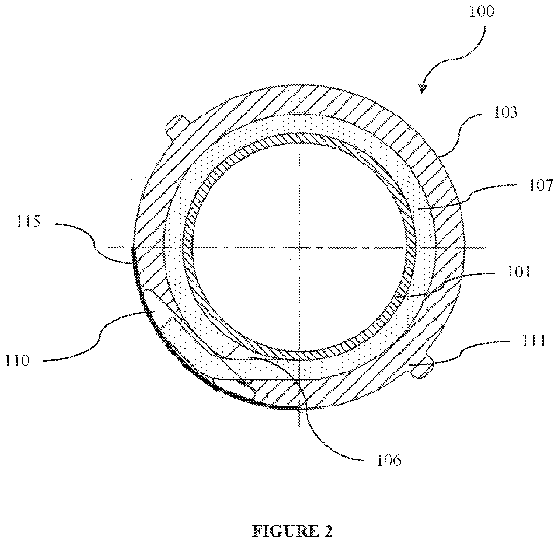

Referring to Figure 2 in conjunction with Figure. 1, the first end (101a) of the pipe (101) is non-removably coupled to the first coupling end (103a) of the coupler (103). The second coupling end (103b) of the coupler (103) may be adapted to receive the second end (101b) of another pipe (101). As shown in Figure. 2, a locking mechanism is provided in the pipe and coupler assembly (100) for locking the first end (101a) of the pipe (101) with the first coupling end (103a). In an embodiment, the locking mechanism may prevent axial and rotational movement of the pipe (101) with respect to the coupler (103). The locking mechanism may include a locking means such as but not limiting to wire lock (107) inserted in a first annular groove (105) formed between the first coupling end (103a) and the first end (101a) of the pipe (101). Figure. 2, depicts the first annular groove (105) which is partially in the coupler (103), and partially in the pipe (101). The first annular groove (105) is formed such that it extends in the coupler (103) and co-operates with the pipe (101) to form the complete groove. Further, the coupler (103) also includes a tangential hole (106) extending from an outer surface to the inner surface. The tangential hole (106) may intersect with the first annular groove (105), such that the wire lock (107) may be inserted into the first annular groove (105) through the tangential hole (106). In an embodiment of the disclosure, a portion of groove in the coupler (103) is made longer with respect to the groove in the pipe (101), to ensure the wire lock (107) does not share the axial load in the usage. In an embodiment of the disclosure, the wire lock (107) may be made of any flexible material. As an example, the material of the wire lock (107) may include polymeric material, metallic material, and composite material. The wire lock (107) may be inserted to the first annular groove (105) through the tangential hole (106) using any suitable mechanism. During the process, the wire lock (107) resides in the first annular groove (105) and abuts a portion of the wire lock (107). Then, the wire lock (107) may be cut and folded in a slot (110) configured on the outer surface of the coupler (103). In an embodiment, the slot (110) may be formed by a machining process, and profiled to accommodate the wire lock (107). As an example, the slot (110) may be formed by milling process. Folding of the wire lock (107) in the slot (110) acts as a lock for holding the first end (101a) of the pipe (101) in the coupler (103), and also acts as an enveloping circle of outer diameter of coupler (103). Figure 2 also shows a closure (115) around the slot (110). The closure may be provided to enclose the wire lock (107). The closure (115) may be removed to access the bent portion of the wire lock (107). The bent portion of wire lock (107) may be straightened for pulling the wire lock (107) out of the first annular groove (105) for dismantling the threaded joint.

In an embodiment of the disclosure, the first annular groove (105) may be formed at mouth region of threading in the first coupling end (103a) of the coupler (103) to accommodate the wire lock (107). The first end (101a) of the pipe (101) may be non-removably coupled to the coupler (103) in a factory and is locked with the wire lock (107) such that, there will not be any disturbance of removing this end while assembling/dismantling the complete piping system.

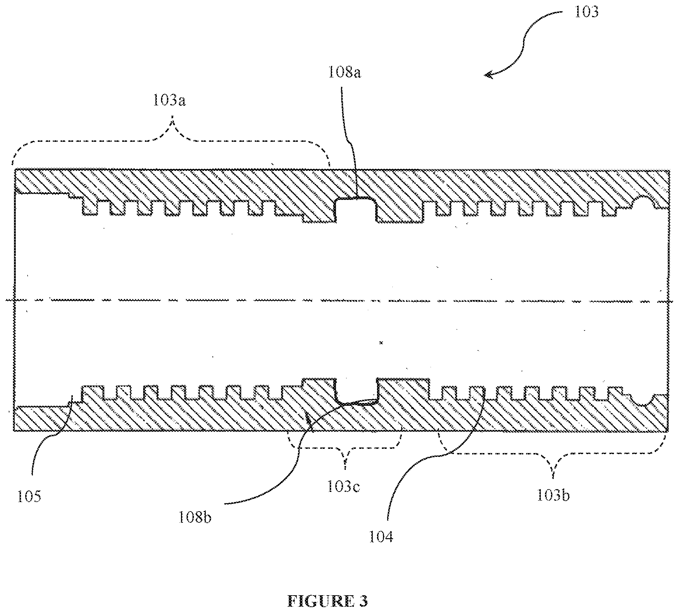

The coupler (103) includes a plurality of ribs (111) on the outer surface, and the plurality of ribs (111) acts as the holding supporters for the wrench during tightening or loosening operations. As there are two threaded joints in each coupler (103) [shown in Figure. 3], one end of the coupler (103) i.e. first coupling end (103a) of the coupler (103) may be non-removably fixed to the first end (101a) of the pipe (101). The inner surface of the coupler (103) includes a plurality of the internal square shaped threads (104) in both the first coupling end (103a) and the second coupling end (103b), and the two coupling ends are divided by a flat portion (103c). The flat portion (103c) may act as a space for accommodating a sealing member between the first coupling end (103a) and the first end (101a) of the pipe (101). The sealing member as known in the art, may be provided in the groove to act as fluid seal to prevent leakage. However, the provision of the groove may induce stress concentration in the coupler (103). To mitigate the problem associated with the groove, the groove in the coupler (103) i.e. second annular groove (108) as shown in Figure 3, is widened to relive the stresses. The second annular groove (108) is defined in the flat portion (103c) of the coupler (103). The second annular groove (108) is defined with a substantially flat base portion (108a) with curved edges (108b). In an embodiment, the edges (108b) may be defined with a radius to relive the stresses.

In an exemplary embodiment, the width of the second annular groove (108) is greater than pitch of the plurality of the inner square shaped threads (104). As an example, the width of the second annular groove (1108) is at least two times of the pitch of the plurality of the inner square shaped threads (104) in the coupler (103).

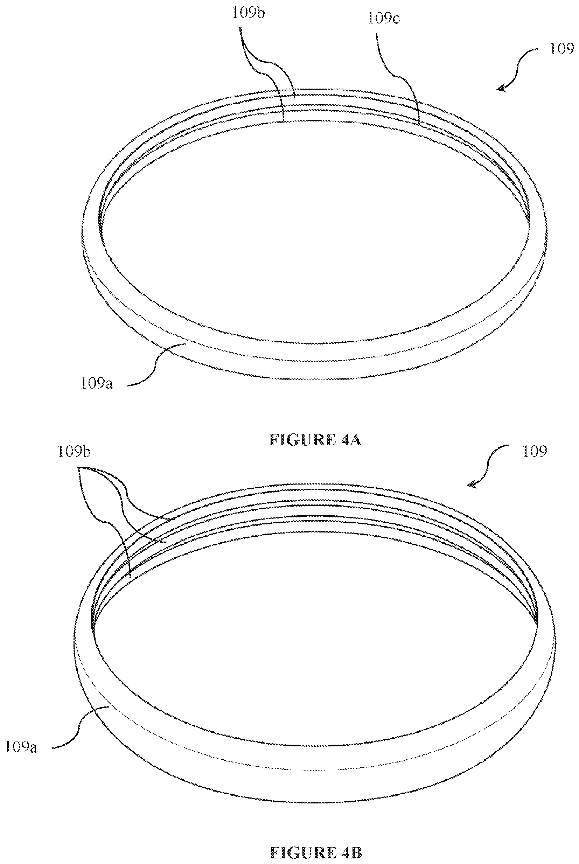

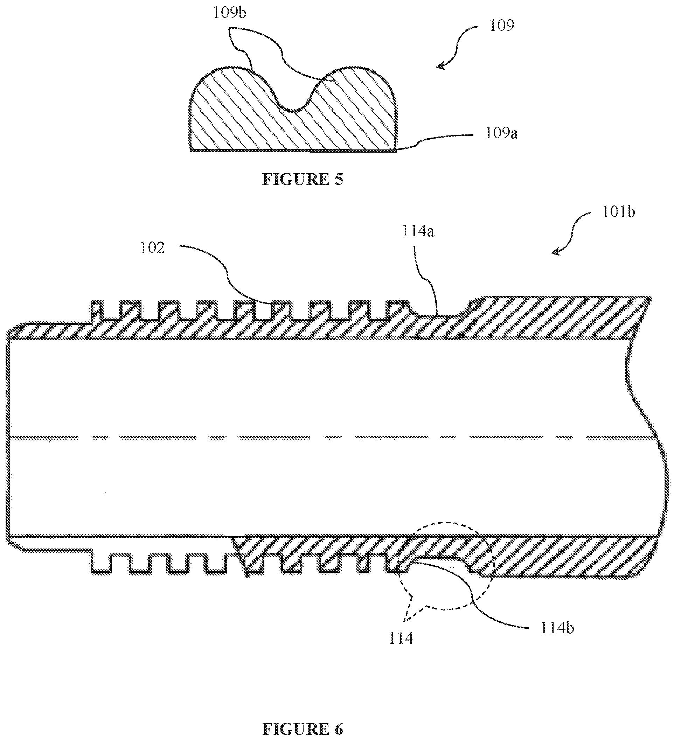

As shown in Figure. 1, the second annular groove (108) accommodates the sealing member, which acts as a fluid seal between the first coupling end (103a) and the first end (101a) of the pipe (101). According to the invention, the second annular groove (108) is provided in a flat portion (1013c) of the coupler (103) or in an embodiment not forming part of the invention it may be provided in a first coupling end (103a) of the coupler (103). The sealing member employed in the second annular groove (108) is a first multi-lip sealing ring (109) as shown in Figures. 4A and 4B. The first multi-lip sealing ring (109) may be made of any material which acts as a seal between the pipe (101) and coupler (103). As an example, the first multi-lip sealing member may be made of a polymeric material. Referring to Figure. 5, the first multi-lip sealing ring (109) comprises a flat base portion (109a) on an outer surface and a plurality of inner projections (109b) projecting in an inner surface. Each of the plurality of inner projections (109b) is divided by a cavity (109c). The first multi-lip sealing ring (109) may be positioned in the second annular groove (108) such that, the flat base portion (109a) rests in the second annular groove (108), and the plurality of inner projections (109b) protrude out from the second annular groove (108). When, the first end (101a) of the pipe (101) is threaded to the first coupling end (103a), the plurality of inner projections (109b) may abut the surface of the pipe (101) in the first end (101a). Thereby forming the fluid seal. In an embodiment, the number of the inner projections (109b) may depend on the requirement of fluid sealing. The Figures. 4A and 4B illustrates the first multi-lip sealing ring (109) with two and three inner projections (109b) divided by cavities (109c). Such illustration is for the purpose of understanding and the same should not be considered as limitation. Also, the inner projections (109b) extending from the flat surface (109a) are illustrated in the form of curved edges, and the same should not be considered as limitation. One may configure edges of the inner projections (109b) as tapered edges or any other configuration which serve the purpose. The configuration of the first multi-lip sealing ring (109) ensures better sealing between the coupler (103) and the first end (101a) of the pipe (101), and thereby prevents any possible leakage of the fluid from the pipe (101) and coupler assembly (100). Also, the second annular groove (108) reduces stress concentration, and thereby notching effect may be avoided at the groove region. Thus, enhances life of the coupler (103). In an embodiment, lip portion of the multi-lip sealing ring (109) extends from the flat base portion (109a) outwardly on the inner side of the multi-lip sealing ring (109). The lip portion may also be inferred to as a seal member, as the lip portion of the multi-lip sealing ring performs the action of sealing, thereby preventing leakage.

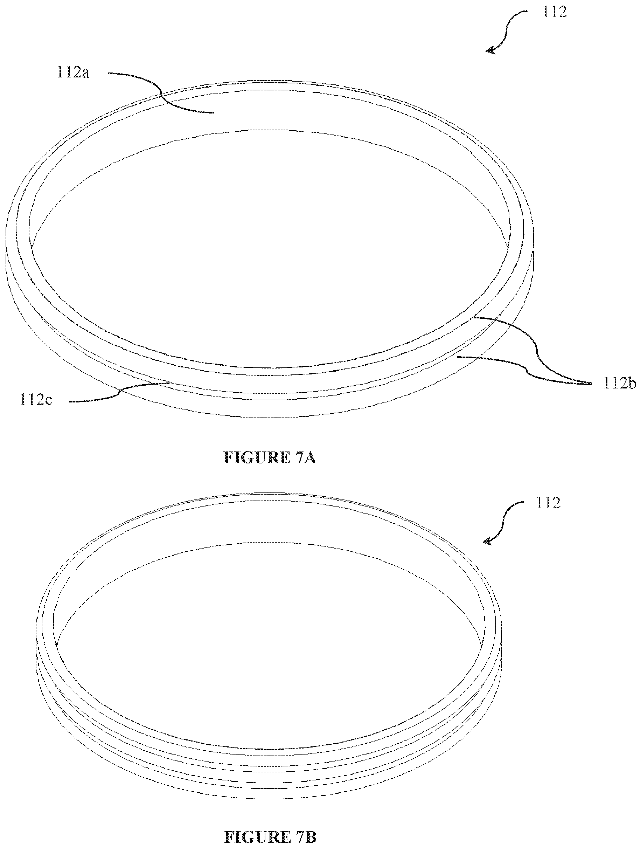

Figure. 6 is an exemplary embodiment of the present invention which illustrates a sectional view of the second end (101b) of the pipe (101). The second end (101b) of the pipe (101) may be considered as a temporary end, which is receivable by the second coupling end (103b) of the coupler (103). The second end (101b) is coupled to the coupler (103) such that, the plurality of inner square shaped threads (104) in the second coupling end (103b) completely accommodates the outer square shaped threads (102) in the second end (101b) of the pipe (101). This stage starts at the mouth of the borewell where assembling/dismantling of the whole piping system takes place. Second end (101b) of the pipe (101) may be defined with a third annular groove (114) to accommodate the sealing member. In an embodiment, the third annular groove (114) may be provided at a bottom of the plurality of outer square shaped threads (102) [shown in figure 6]. The third annular groove (114) may be profiled to match with the sealing member. In an embodiment, the third annular groove (114) may include a substantially flat base portion (114a) with curved edges (114b). The sealing member may be accommodated in the third annular groove (114), and the sealing member is a second multi-lip sealing ring (112). The second multi-lip sealing ring (112) is adapted to abut the inner surface of the second coupling end (103b) to form the fluid seal between the second end (101b) of the pipe (101) and the second coupling end (103b) of the coupler (103). The second multi-lip sealing ring (112) may be provided in a portion of the second end (101b) adjoining the plurality of outer square-shaped threads (102). Referring to Figures. 7A and 7B, the second multi-lip sealing ring (112) comprises a flat base portion (112a) in an inner surface and a plurality of outward projections (112b) projecting on an outer surface, and each of the plurality of outward projections (112b) is divided by a cavity (112c). The second multi-lip sealing ring (112) may be positioned in the second annular groove (108) such that, the flat base portion (112a) rests in the third annular groove (114), and the plurality of outward projections (112b) protrude out from the third annular groove (114). When, the second end (101b) of the pipe (101) is threaded to the second coupling end (103b), the plurality of outward projections (112b) may abut the surface of the coupler (103) in the second coupling end (103b). Thereby, forming the fluid seal. In an embodiment, the number of outward projections may depend on the requirement of the fluid sealing. The Figures 7A and 7B illustrates the second multi-lip sealing ring (112) with two and three projections divided by cavities. Such illustration is for the purpose of understanding and the same should not be considered as limitation. Also, the projections extending from the flat surface may have any shape such as but not limiting to curved edges, tapered edges or any other configuration which serve the purpose.

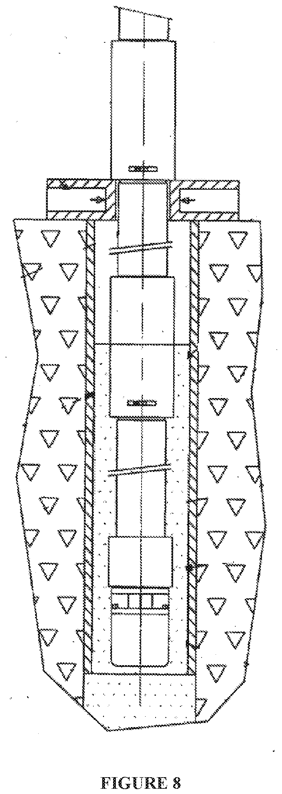

Referring now to Figure 8, which is an exemplary embodiment of the invention illustrating a schematic view of the pipe (101) and coupler (103) assemblies fixed to a submersible pump inside the borewell for drawing the water from source to the point of interest. For the installation in the site i.e. borewell, the pipe and coupler assembly (100) will be delivered with the first end (101a) of the pipe (101) and non-removably coupled to the first coupling end (103a). This fixing operation may be carried out in the factory. During the process of assembly (100), the submersible pump may be coupled to one of the pipe (101) and coupler assembly (100) using a suitable connector [not shown]. Then, the user will thread the second end (101b) of the pipe (101) with the second coupling end (103b) of the coupler (103), then the process continues till the submersible pump reaches the source. Then, the piping system may be clamped at the top for holding it in place. For any maintenance purpose the user is supposed to unthread only the temporary joint i.e. second end (101b) of the pipe (101) with the second coupling end (103b) which may be possible by holding the coupler (103) with a pipe wrench and unscrew the pipe (101) mating at a top portion. During this condition, a clamp may be used just below the coupler (103) to give support and grip the pipe and coupler assembly (100). This process is repeated during disassembly of every pipe (101) joint to hold the coupler (103) positively with the pipe wrench, the provision has been given in the form of two external ribs (111) on the outer surface of the coupler (103).

It is to be noted that the use of the pipe and coupler assembly (100) in the borewell application is an exemplary application of the pipe and coupler assembly (100) of the present invention. The assembly (100) may be used in any other applications including the ground applications to serve the purpose of fluid supply.

In an embodiment of the invention, the pipe and coupler assembly (100) manufactured of Polyvinyl Chloride are rigid, lightweight and user friendly.

In an embodiment of the invention, the pipe and coupler assembly (100) having square type threads will have high load holding capacity. Also, the configuration of annular grooves and multi-lip sealing rings ensures leak proof joint at high pump pressure.

While various aspects and embodiments have been disclosed herein, other aspects and embodiments will be apparent to those skilled in the art. The various aspects and embodiments disclosed herein are for purposes of illustration and are not intended to be limiting.

**Referral Numerals:**

| **Reference Number** | **Description** |
|---|---|
| 100 | Pipe and coupler assembly |
| 101 | Pipe |
| 101a | First end of the pipe |
| 101b | Second end of the pipe |
| 102 | Outer squire-shaped threads |
| 103 | Coupler |
| 103a | First coupling end |
| 103b | Second coupling end |
| 103 c | Flat portion |
| 104 | Inner square shaped threads |
| 105 | First annular groove |
| 106 | Tangential hole |
| 107 | Wire lock |
| 108 | Second annular groove |
| 108a | Flat base portion |
| 108b | Edges |
| 109 | First multi-lip sealing ring |
| 109a | Flat base portion |
| 109b | Plurality of inner projections |
| 109c | Cavity |
| 110 | Slot |
| 111 | Ribs |
| 112 | Second multi-lip sealing ring |
| 112a | Flat base portion |
| 112b | Plurality of outward projections |
| 112c | Cavity |
| 113 | Annular rib |
| 114 | Third annular groove |
| 114a | Flat portion |
| 114b | Curved edges |
| 115 | Closure |

## Claims

1. A pipe and coupler assembly (100) made of polyvinyl chloride, the assembly (100) comprising:
a pipe (101) having a first end (101a), wherein at least a portion of an outer surface of the first end (101a) is provided with a plurality of outer threads (102);
a coupler (103), comprising, a first coupling end (103a) and a second coupling end (103b) having a plurality of inner threads (104) in an inner surface, divided by a flat portion (103c), wherein, the first end (101a) of the pipe (101) is configured to be coupled to the first coupling end (103a);
a locking means (107) inserted in a first annular groove (105), formed between the first coupling end (103a) and the first end (101a) of the pipe (101), the locking means is configured to lock the first end (101a) of the pipe (101) with the first coupling end (103a);
a second annular groove (108) defined in the flat portion (103c) of the coupler (103), the assembly being **characterized in that** the second annular groove (108) is defined with a substantially flat bottom portion (108a) with curved ends (108b), wherein a width of the second annular groove (108) is greater than pitch of the plurality of the inner square shaped threads (104); and
a first multi-lip sealing ring (109) accommodated in the second groove (108) to form a fluid seal between the first end (101a) of the pipe (101) and the first coupling end (103a) of the coupler (103).

2. The assembly (100) as claimed in claim 1, wherein the first multi-lip sealing ring (109) comprises a flat base portion (109a) on an outer surface and a plurality of inner projections (109b) projecting in an inner surface.

3. The assembly (100) as claimed in claim 2, wherein each of the plurality of inner projections (109b) is divided by a cavity (109c).

4. The assembly (100) as claimed in claim 2, wherein the plurality of inner projections (109b) abuts the outer surface of the first end (101a) of the pipe (101).

5. The assembly (100) as claimed in claim 1, wherein the plurality of outer threads (102) and the plurality of inner threads (104) are square shaped threads, and wherein the width of the second annular groove (108) is at least two times of the pitch of the plurality of the inner square shaped threads (104).

6. The assembly (100) as claimed in claim 1, wherein the locking means (107) is a deformable member.

7. The assembly (100) as claimed in claim 6, wherein the locking means (107) is made of a metallic material or a polymeric material.

8. The assembly (100) as claimed in claim 1, wherein the locking means (107) is a wire lock.

9. The assembly (100) as claimed in claim 1, wherein the coupler (103) includes a slot (110) defined on the outer surface of the adjoining tangential hole (106) to fold the locking means (107) within an outer diameter of the coupler (103).

10. The assembly (100) as claimed in claim 1, comprises a plurality of ribs (111) on the outer surface of the coupler (103) to hold a pipe-wrench during assembling and dismantling of the coupler (103) and the pipe (101).

11. The assembly (100) as claimed in claim 1, wherein the second end (101b) of the pipe (101) is receivable by the second coupling end (103b) of an adjoining coupler (103) for joining two pipes (101).

12. The assembly (100) as claimed in claim 1 comprises a second multi-lip sealing ring (112) provided on the second end (101b) of the pipe (101).

13. The assembly (100) as claimed in claim 12, wherein the second multi-lip sealing ring (112) is adapted to abut the inner surface of the second coupling end (103b) to form a fluid seal between the second end (101b) of the pipe (101) and the second coupling end (103b) of the coupler (103).

14. The assembly (100) as claimed in claim 12, wherein the second multi-lip sealing ring (112) is provided in a portion of the second end (101b) adjoining a plurality of outer square-shaped threads (102).

15. The assembly (100) as claimed in claim 1, wherein the coupler (103) comprises an annular rib (113) extending in the inner surface of the coupler (103) in the flat portion (103c).

## Patentansprüche

1. Rohr-und-Kupplungs-Anordnung (100), die aus Polyvinylchlorid besteht, wobei die Anordnung (100) umfasst:
ein Rohr (101) mit einem ersten Ende (101a), wobei wenigstens ein Abschnitt einer Außenfläche des ersten Endes (101a) mit einer Vielzahl von Außengewindegängen (102) versehen ist;
eine Kupplungseinrichtung (103), die ein erstes Kupplungsende (103a) und ein zweites Kupplungsende (103b) umfasst, die eine Vielzahl von Innengewindegängen (104) in einer Innenfläche aufweisen, durch einen flachen Abschnitt (103c) abgeteilt sind, wobei das erste Ende (101a) des Rohrs (101) zum Koppeln mit dem ersten Kupplungsende (103a) ausgeführt ist;
eine Verriegelungseinrichtung (107), die in eine erste ringförmige Nut (105) eingeführt ist, die zwischen dem ersten Kupplungsende (103a) und dem ersten Ende (101a) des Rohrs (101) ausgebildet ist, wobei die Verriegelungseinrichtung so ausgeführt ist, dass sie das erste Ende (101a) des Rohrs (101) mit dem ersten Kupplungsende (103a) verriegelt;
eine zweite ringförmige Nut (108), die in dem flachen Abschnitt (103c) der Kupplungseinrichtung (103) ausgebildet ist,
wobei die Anordnung **dadurch gekennzeichnet ist, dass** die zweite ringförmige Nut (108) mit einem im Wesentlichen flachen Bodenabschnitt (108a) mit gekrümmten Enden (108b) versehen ist, und eine Breite der zweiten ringförmigen Nut (108) größer ist als eine Steigung der Vielzahl der Rechteck-Innengewindegänge (104); und
ein erster Mehrfachlippen-Dichtungsring (109) in der zweiten Nut (108) aufgenommen ist, um eine Fluiddichtung zwischen dem ersten Ende (101a) des Rohrs (101) und dem ersten Kupplungsende (103a) der Kupplungseinrichtung (103) zu bilden.

2. Anordnung (100) nach Anspruch 1, wobei der erste Mehrfachlippen-Dichtungsring (109) einen flachen Basisabschnitt (109a) an einer Außenfläche sowie eine Vielzahl innerer Vorsprünge (109b) umfasst, die in einer Innenfläche vorstehen.

3. Anordnung (100) nach Anspruch 2, wobei jeder der Vielzahl innerer Vorsprünge (109b) durch einen Hohlraum (109c) abgeteilt ist.

4. Anordnung (100) nach Anspruch 2, wobei die Vielzahl innerer Vorsprünge (109b) an der Außenfläche des ersten Endes (101a) des Rohrs (101) anliegt.

5. Anordnung (100) nach Anspruch 1, wobei die Vielzahl von Außengewindegängen (102) und die Vielzahl von Innengewindegängen (104) rechteckig geformte Gewindegänge sind, und die Breite der zweiten ringförmigen Nut (108) wenigstens zweimal so groß ist wie die Steigung der Vielzahl der Rechteck-Innengewindegänge (104).

6. Anordnung (100) nach Anspruch 1, wobei die Verriegelungseinrichtung (107) ein verformbares Element ist.

7. Anordnung (100) nach Anspruch 6, wobei die Verriegelungseinrichtung (107) aus einem Metallmaterial oder einem Polymermaterial besteht.

8. Anordnung (100) nach Anspruch 1, wobei die Verriegelungseinrichtung (107) eine Drahtsicherung ist.

9. Anordnung (100) nach Anspruch 1, wobei die Kupplungseinrichtung (103) einen Schlitz (110) enthält, der an der Außenfläche des angrenzenden tangentialen Lochs (106) zum Zusammenfalten der Verriegelungseinrichtung (107) innerhalb eines Außendurchmessers der Kupplungseinrichtung (103) ausgebildet ist.

10. Anordnung (100) nach Anspruch 1, wobei sie eine Vielzahl von Rippen (111) an der Außenfläche der Kupplungseinrichtung (103) zum Halten einer Rohrzange beim Montieren und Demontieren der Kupplungseinrichtung (103) und des Rohrs (101) umfasst.

11. Anordnung (100) nach Anspruch 1, wobei das zweite Ende (101b) des Rohrs (101) von dem zweiten Kupplungsende (103b) einer angrenzenden Kupplungseinrichtung (103) zum Verbinden zweier Rohre (101) aufgenommen werden kann.

12. Anordnung (100) nach Anspruch 1, wobei sie einen zweiten Mehrfachlippen-Dichtungsring (112) umfasst, der sich an dem zweiten Ende (101b) des Rohrs (101) befindet.

13. Anordnung (100) nach Anspruch 12, wobei der zweite Mehrfachlippen-Dichtungsring (112) so eingerichtet ist, dass er an der Innenfläche des zweiten Kupplungsendes (103b) anliegt, um eine Flüssigkeitsdichtung zwischen dem zweiten Ende (101b) des Rohrs (101) und dem zweiten Kupplungsende (103b) der Kupplungseinrichtung (103) zu bilden.

14. Anordnung (100) nach Anspruch 12, wobei sich der zweite Mehrfachlippen-Dichtungsring (112) in einem Abschnitt des zweiten Endes (101b) befindet, der an eine Vielzahl von Rechteck-Außengewindegängen (102) angrenzt.

15. Anordnung (100) nach Anspruch 1, wobei die Kupplungseinrichtung (103) eine ringförmige Rippe (113) umfasst, die sich in der Innenfläche der Kupplungseinrichtung (103) in dem flachen Abschnitt (103c) erstreckt.

## Revendications

1. Ensemble tube et raccord (100) en chlorure de polyvinyle, l'ensemble (100) comprenant :
un tube (101) ayant une première extrémité (101a), dans lequel au moins une partie d'une surface extérieure de la première extrémité (101a) est pourvue d'une pluralité de filets extérieurs (102) ;
un raccord (103), comprenant une première extrémité de couplage (103a) et une seconde extrémité de couplage (103b) ayant une pluralité de filets intérieurs (104) dans une surface intérieure, divisée par une partie plate (103c), dans lequel la première extrémité (101a) du tube (101) est configurée pour être couplée à la première extrémité de couplage (103a) ;
un moyen de verrouillage (107) inséré dans une première rainure annulaire (105), formée entre la première extrémité de couplage (103a) et la première extrémité (101a) du tube (101), le moyen de verrouillage est configuré pour verrouiller la première extrémité (101a) du tube (101) avec la première extrémité de couplage (103a) ;
une seconde rainure annulaire (108) définie dans la partie plate (103c) du raccord (103), l'ensemble étant **caractérisé en ce que** la seconde rainure annulaire (108) est définie avec une partie de fond sensiblement plate (108a) avec des extrémités incurvées (108b), dans lequel une largeur de la seconde rainure annulaire (108) est supérieure au pas de la pluralité des filets intérieurs de forme carrée (104) ; et
une première bague d'étanchéité à lèvres multiples (109) logée dans la seconde rainure (108) pour former un joint d'étanchéité aux fluides entre la première extrémité (101a) du tube (101) et la première extrémité de couplage (103a) du raccord (103).

2. Ensemble (100) selon la revendication 1, dans lequel la première bague d'étanchéité à lèvres multiples (109) comprend une partie de base plate (109a) sur une surface extérieure et une pluralité de saillies intérieures (109b) faisant saillie dans une surface intérieure.

3. Ensemble (100) selon la revendication 2, dans lequel chacune de la pluralité de saillies internes (109b) est divisée par une cavité (109c).

4. Ensemble (100) selon la revendication 2, dans lequel la pluralité de saillies intérieures (109b) vient en butée contre la surface extérieure de la première extrémité (101a) du tube (101).

5. Ensemble (100) selon la revendication 1, dans lequel la pluralité de filets extérieurs (102) et la pluralité de filets intérieurs (104) sont des filets de forme carrée, et dans lequel la largeur de la seconde rainure annulaire (108) est au moins deux fois le pas de la pluralité des filets intérieurs de forme carrée (104).

6. Ensemble (100) selon la revendication 1, dans lequel le moyen de verrouillage (107) est un élément déformable.

7. Ensemble (100) selon la revendication 6, dans lequel le moyen de verrouillage (107) est constitué d'un matériau métallique ou d'un matériau polymère.

8. Ensemble (100) selon la revendication 1, dans lequel le moyen de verrouillage (107) est un verrou à fil.

9. Ensemble (100) selon la revendication 1, dans lequel le raccord (103) comprend une fente (110) définie sur la surface extérieure du trou tangentiel contigu (106) pour plier le moyen de verrouillage (107) à l'intérieur d'un diamètre extérieur du raccord (103).

10. Ensemble (100) selon la revendication 1, comprend une pluralité de nervures (111) sur la surface extérieure du raccord (103) pour maintenir une clé à tube pendant l'assemblage et le démontage du raccord (103) et du tube (101).

11. Ensemble (100) selon la revendication 1, dans lequel la seconde extrémité (101b) du tube (101) peut être reçue par la seconde extrémité d'accouplement (103b) d'un raccord adjacent (103) pour joindre deux tubes (101).

12. Ensemble (100) selon la revendication 1 comprend une seconde bague d'étanchéité à lèvres multiples (112) prévue sur la seconde extrémité (101b) du tube (101).

13. Ensemble (100) selon la revendication 12, dans lequel la seconde bague d'étanchéité à lèvres multiples (112) est conçue pour venir en butée contre la surface interne de la seconde extrémité de couplage (103b) pour former un joint d'étanchéité aux fluides entre la seconde extrémité (101b) du tube (101) et la seconde extrémité de couplage (103b) du raccord (103).

14. Ensemble (100) selon la revendication 12, dans lequel la seconde bague d'étanchéité à lèvres multiples (112) est prévue dans une partie de la seconde extrémité (101b) adjacente à une pluralité de filets extérieurs de forme carrée (102).

15. Ensemble (100) selon la revendication 1, dans lequel le raccord (103) comprend une nervure annulaire (113) s'étendant dans la surface intérieure du raccord (103) dans la partie plate (103c).
